**Europäisches Patentamt**

**European Patent Office**

**Office européen des brevets**

(11) Publication number: **0 108 607**
**A2**

## (12) EUROPEAN PATENT APPLICATION

(21) Application number: **83306668.1**

(22) Date of filing: **02.11.83**

(51) Int. Cl.³: **F 16 K 31/02**
**F 04 D 25/14, F 24 F 13/15**

(30) Priority: **03.11.82 GB 8231447**

(43) Date of publication of application:
**16.05.84 Bulletin 84/20**

(84) Designated Contracting States:
**AT BE CH DE IT LI NL**

(71) Applicant: **GEC-XPELAIR LIMITED**
**P.O. Box 220 Deykin Avenue**
**Witton Birmingham, B6 7JH(GB)**

(72) Inventor: **McMichael, William George**
**No:1 Milverton Close Walmley**
**Sutton Coldfield West Midlands, B76 8NB(GB)**

(74) Representative: **Kirby, Harold Victor Albert**
**Central Patent Department The General Electric**
**Company p.l.c. Hirst Research Centre East Lane**
**Wembley Middlesex HA9 7PP(GB)**

(54) Actuator.

(57) An actuator, especially for operating a set of pivoted louvres (9) at the mouth of a ventilation duct, comprises a slidable actuating member (1) driven by a bellows (5). The bellows (5) (which is suitably of metal) is connected to an electric heating element (6) (suitably of p.t.c. material) and contains a gas or volatile liquid which generates a pressure inside the bellows in response to a current in the heating element. The actuator is inherently slow-acting and therefore quieter than solenoid-operated actuators.

EP 0 108 607 A2

./...

*Fig. 2.*

The present invention relates to actuators and to apparatus including such actuators.

The invention is particularly but not exclusively applicable to ventilator ducts and the like provided with pivoted shutter vanes and associated with electrically driven fans, and actuators for opening and closing said shutter vanes when said fans are switched on and off respectively. Hitherto solenoid actuators have been used in these situations. However solenoid actuators are inherently fast-acting, and therefore noisy, and tend to be unreliable in some situations.

According to the present invention, an actuator comprises an actuating member movably carried by a support, bellows means operably engageable with the actuating member and said support, and heating means thermally linked to said bellows means, whereby the actuating member is movable relative to said support in response to changes in pressure induced within said bellows means by said heating means. The heating means is preferably mounted externally of the bellows means and is preferably powered by electricity.

The bellows means may either be air or gas-filled or may contain a volatile liquid/vapour mixture. In the latter case at least a proportion of the liquid may be held in the proximity of the interior surface of the bellows wall adjoining the heating means by means of a porous material such as fibreglass disposed so as to depend into the liquid when the actuator is mounted in its operating position so that it soaks up the liquid and ensures that it is rapidly vapourised by the heating means.

-3-

The bellows means may be a conventional corrugated bellows and is suitably constructed of sheet metal such as brass to ensure resilience and good thermal conductivity. However in some cases the bellows means may be in the form of a piston and cylinder and it should be understood that the term "bellows means" includes such devices.

When an electric heating means is used, this is preferably a block of p.t.c. material. Such materials exhibit a positive temperature coefficient of resistance far higher than that of metals, and hence an electrical heating element of p.t.c. material, when powered from a low impedance supply, tends to dissipate less power than a metallic heating element having the same resistance when cold. Furthermore the equilibrium temperature reached by a p.t.c. heating element is much less affected by draughts and other changes in its environment than a similar metallic heating element. Both the above properties are clearly desirable in an actuator, and by incorporating a p.t.c. heating element in a thermal actuator of the type described hereinabove a simple, reliable actuator having a substantially reproducible operating characteristic may be obtained. In some cases it may even be possible, by controlling the power supplied to the p.t.c. heating element, to reproducibly move the actuating member to any position between the "full on" and "full off" positions. However in most cases a simple two position "on,off" actuator is all that is required, and in such cases the power to the heating element may be controlled by a simple switch, a mechanical stop being provided to limit the travel of the actuating member if necessary. When the actuator is used in ventilation arrangements the ventilator fan may be connected in parallel with said heating means with respect to said switch.

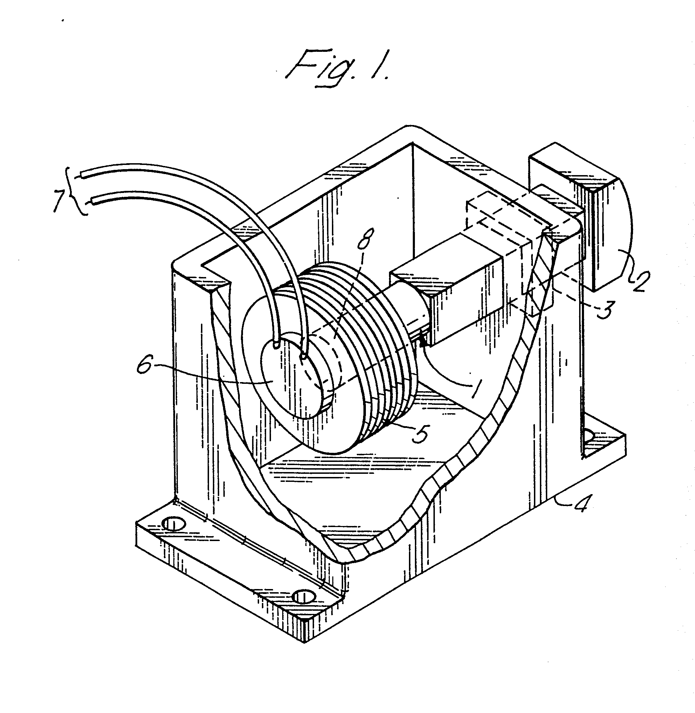

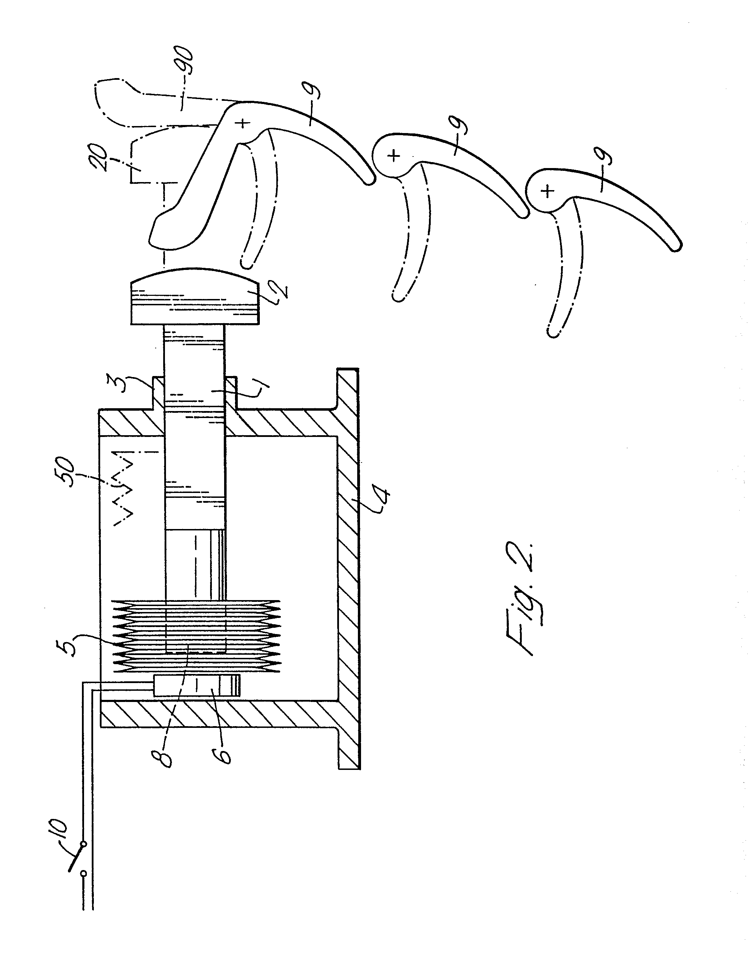

One embodiment of the invention will now be described by reference to Figures 1 and 2 of the accompanying drawings, of which :

Figure 1 is a sketch perspective view, partially cut away, of an actuator in accordance with the invention, and

Figure 2 is a side elevation, partly in section, of an actuator in accordance with the invention in an arrangement for opening and closing a set of interconnected pivotally mounted louvres at the mouth of a ventilation duct.

Referring to Figure 1, the actuator comprises an actuating member 1 provided with a curved actuating face 2 and slidably supported by a closely fitting rectangular sleeve portion 3 in a wall of a box-shaped support 4. The actuating member 1 and support 4 may both be made of plastics material such as A.B.S. A brass bellows 5 is provided, at one end, with a deep tubular recess 8 which accommodates the proximal end of the actuating member 1, the opposite end of the bellows supported against expansive movement by a wall of the support. A p.t.c. heating element 6 is located between said wall of the support and the adjacent end face of the bellows and is powered via a pair of wires 7. The bellows 5 contains a volatile liquid which partially evaporates when the bellows is heated and thereby expands the bellows and advances the actuating face 2. It should be noted that since the bellows 5 is not fixed to the support, but is merely carried by the member 1, the action of the actuator is positive only in the "advance" direction.

In Figure 2 an actuator as shown in Figure 1 is shown in an arrangement for opening a set of pivoted louvres 9 at the mouth of a ventilation duct (not shown) associated with an electrically driven fan. The louvres 9 (which are mechanically interlinked in a conventional manner by means not shown) are shown in the closed position. Operation of the actuator is effected by closing a switch 10, which can also energise the electric fan, this resulting in the heating of the bellows 5 by the p.t.c. element 6; the consequent expansion of the bellows causes the actuating face 2 and louvres 9 to move to the positions indicated by the broken lines 50, 20 and 90 respectively.

When the switch 10 is opened and the element 6 cools, the bellows 5 and the actuating face 2 will retract under the force of the louvres 9 then returning to the closed position, which may either be due to gravity or a biasing spring (not shown).

-6-

CLAIMS

1.    An actuator having an actuating member (1) movably carried by a support (4) characterised by further having a bellows means (5) operably engageable with the actuating member and said support, and heating means (6) thermally linked to said bellows means, whereby the actuating member is movable relative to said support in response to changes in pressure induced within said bellows means by said heating means.

2.    An actuator according to Claim 1 wherein the heating means is powered by electricity.

3.    An actuator according to any of Claims 1 or 2 wherein the heating means is mounted externally of the bellows means.

4.    An actuator according to any preceding Claim wherein the bellows means is filled with a volatile liquid/vapour mixture.

5.    An actuator according to any preceding Claim wherein the bellows means includes a porous material which soaks up the liquid and holds it in the proximity of the interior surface of the bellows wall adjoining the heating means so that it is rapidly vapourised by the heating means.

6.    An actuator according to any preceding Claim wherein the bellows means is a corrugated bellows constructed of resilient sheet material.

7.    An actuator according to any of Claims 1 to 5 wherein the bellows means is in the form of a piston and cylinder.

8.    An actuator according to any of Claims 2 to 7 wherein the electric heating means is a block of positive temperature coefficient material.

9.    An actuator according to Claim 2 coupled to pivoted shutter vanes associated with an electrically driven fan, in which the heating means is connected so as to be energised, and thereby cause the shutter vanes to be opened, when the fan is operated.

Fig. 1.

*Fig. 2*